# EUROPEAN PATENT APPLICATION

(11) **EP 4 329 006 A1**
(43) Date of publication of application: **28.02.2024**
(21) Application number: 22791353.0
(22) Date of filing: 18.02.2022
(51) Int. Cl.: H01M 4/38, H01M 4/134, H01M 4/1395, H01M 4/66, H01M 10/052, H01M 10/0562

(54) **BATTERY, AND METHOD FOR MANUFACTURING ELECTRODE**

(30) Priority: 20.04.2021 JP 2021071464
(71) Applicant: Panasonic Intellectual Property Management Co., Ltd., Kadoma-shi, Osaka 571-0057 (JP)
(72) Inventor: OTO Takashi, Kadoma-shi, Osaka 571-0057 (JP); FUJIMOTO Masahisa, Kadoma-shi, Osaka 571-0057 (JP)
(74) Representative: Grünecker Patent- und Rechtsanwälte PartG mbB
(86) International application number: PCT/JP2022/006551
(87) International publication number: WO 2022/224570

(57) **Abstract**

A battery includes a first electrode, a second electrode, and a solid electrolyte layer disposed between the first electrode and the second electrode, the first electrode includes a current collector and an active material layer disposed between the current collector and the solid electrolyte layer, the active material layer contains BiNi, and the BiNi has a crystal structure of space group C2/m.

## Description

### Technical Field

The present disclosure relates to a battery and method for manufacturing electrode.

### Background Art

Lithium secondary batteries have been a subject of active research and development in recent years, and their battery characteristics, such as charge-discharge voltage, charge-discharge cycle life, and storage properties, are strongly dependent on electrodes used therein. Thus, battery characteristics have been improved by improving electrode active materials.

For example, lithium secondary batteries that use electrodes containing aluminum, silicon, tin, or the like that electrochemically alloys with lithium during charging have been proposed from early days. PTL 1 discloses a lithium secondary battery equipped with a negative electrode containing a negative electrode material made of an alloy containing silicon, tin, and a transition metal, a positive electrode, and an electrolyte.

PTL 2 discloses a lithium secondary battery equipped with a negative electrode that uses, as an active material, a silicon thin film formed on a current collector, a positive electrode, and an electrolyte.

Another example of the metal that alloys with lithium is bismuth (Bi). NPL 1 discloses a negative electrode that is produced by using a Bi powder and that contains Bi as a negative electrode active material.

### Citation List

### Patent Literature

PTL 1: Japanese Patent No. 4898737
PTL 2: Japanese Patent No. 3733065

### Non Patent Literature

NPL 1: YAMAGUCHI, Hiroyuki, "Amorphous Polymeric Anode Materials from Poly(acrylic acid) and Metal Oxide for Lithium Ion Batteries", Mie University, doctoral dissertation, 2015

### Summary of Invention

### Technical Problem

The present disclosure provides a battery having improved cycle characteristics.

### Solution to Problem

A battery of the present disclosure includes:
a first electrode,
a second electrode, and
a solid electrolyte layer disposed between the first electrode and the second electrode,
the first electrode includes a current collector and an active material layer disposed between the current collector and the solid electrolyte layer,
the active material layer contains BiNi, and
the BiNi has a crystal structure of space group C2/m.

### Advantageous Effects of Invention

According to the present disclosure, a battery having improved cycle characteristics can be provided.

### Brief Description of Drawings

[Fig. 1] Fig. 1 is a schematic cross-sectional view of a structural example of a battery according to an embodiment of the present disclosure.
[Fig. 2] Fig. 2 is a graph indicating one example of an X-ray diffraction pattern of an active material layer constituted by a BiNi thin film prepared on a nickel foil.
[Fig. 3] Fig. 3 is a graph showing the results of a charge-discharge test of the test cell of Example 1.
[Fig. 4] Fig. 4 is a graph showing the results of the charge-discharge cycle test of the test cell of Example 1.
[Fig. 5] Fig. 5 is a graph showing the discharge capacity retention ratio of the test cell of Example 1 with respect to the initial discharge capacity for each charge-discharge cycle.
[Fig. 6] Fig. 6 is a graph showing the results of the charge-discharge test of the test cell of Example 2.
[Fig. 7] Fig. 7 is a graph showing the results of the charge-discharge cycle test of the test cell of Example 2.
[Fig. 8] Fig. 8 is a graph showing the discharge capacity retention ratio of the test cell of Example 2 with respect to the initial discharge capacity for each charge-discharge cycle.
[Fig. 9] Fig. 9 is a graph showing the results of the charge-discharge test of the test cell of Reference Example 1.
[Fig. 10] Fig. 10 is a graph showing the results of the charge-discharge cycle test of the test cell of Reference Example 1.
[Fig. 11] Fig. 11 is a graph showing the discharge capacity retention ratio of the test cell of Reference Example 1 with respect to the initial discharge capacity for each charge-discharge cycle.
[Fig. 12] Fig. 12 is a graph indicating an X-ray diffraction pattern of the BiNi powder prepared from the powder raw materials in Example 3.
[Fig. 13] Fig. 13 is a graph showing the results of the charge-discharge test of the test cell of Example 3.
[Fig. 14] Fig. 14 is a graph showing the results of the charge-discharge cycle test of the test cell of Example 3.
[Fig. 15] Fig. 15 is a graph showing the results of the charge-discharge test of the test cell of Example 4.
[Fig. 16] Fig. 16 is a graph showing the results of the charge-discharge cycle test of the test cell of Example 4.
[Fig. 17] Fig. 17 is a graph showing the results of the charge-discharge test of the test cell of Example 5.
[Fig. 18] Fig. 18 is a graph showing the results of the charge-discharge cycle test of the test cell of Example 5.
[Fig. 19] Fig. 19 is a graph that indicate one example of the peak intensity ratios I(2)/I(1) calculated from the X-ray diffraction patterns of 10 samples of active material layers made of BiNi synthesized by solid-phase diffusion of nickel from the nickel foil to the Bi plating layer, and four samples of active material layers made of BiNi powders prepared from powder raw materials.
[Fig. 20] Fig. 20 is a graph indicating one example of X-ray diffraction patterns of the active material layer before charging, after charging, and after discharging. Description of Embodiments

### (Findings that formed the basis of the present disclosure)

As described in the "Background Art" section, battery characteristics of lithium secondary batteries have been improved by improving electrode active materials.

When lithium metal is used as a negative electrode active material, a lithium secondary battery that has high energy densities per weight and per volume is obtained. However, in a lithium secondary battery having this structure, lithium dendrites are deposited during charging. Since some of the deposited lithium metal reacts with the electrolyte solution, there have been issues of low charge-discharge efficiency and deteriorated cycle characteristics.

To address this, a proposal to use carbon, in particular, graphite, as a negative electrode has been made. In a negative electrode containing carbon, charging and discharging are realized by lithium intercalation into and deintercalation from carbon. When a negative electrode has such a structure, the charge-discharge mechanism does not cause deposition of lithium metal dendrites. In addition, a lithium secondary battery that has a negative electrode having such a structure has excellent reversibility due to topotactic reactions and has nearly 100% charge-discharge efficiency. Due to these features, lithium secondary batteries having negative electrodes containing carbon, in particular, graphite, have been put to practical use. However, the theoretical capacity density of graphite is 372 mAh/g, which is about one tenth of the theoretical capacity density of lithium metal, 3884 mAh/g. Thus, the active material capacity density of a negative electrode containing graphite is low. Furthermore, since the actual capacity density of graphite is nearly as high as the theoretical capacity density, increasing the capacity of the negative electrode containing graphite has reached a limit.

To address this, lithium secondary batteries that use electrodes containing aluminum, silicon, tin, or the like that electrochemically alloys with lithium during charging have been proposed from early days. The capacity density of a metal that alloys with lithium is far larger than the capacity density of graphite. In particular, the theoretical capacity density of silicon is high. Thus, an electrode containing a material, such as aluminum, silicon, or tin, that alloys with lithium has a good prospect as a negative electrode for a high-capacity battery, and various types of secondary batteries that use such negative electrodes have been proposed (PTL 1).

However, a negative electrode that contains the aforementioned metal that alloys with lithium expands upon lithium intercalation and contracts upon lithium deintercalation. Repeating such expansion and contraction during charging and discharging breaks the alloy serving as the electrode active material into fine particles due to charging and discharging and deteriorates the current collecting properties of the negative electrode; thus, sufficient cycle characteristics have not been obtained. The following attempts have been made to address these issues. For example, in one attempt, silicon is sputter-deposited or vapor-deposited on a roughened surface of a current collector, or tin is deposited by electroplating (PTL 2). According to this attempt, the active material, in other words, a metal that alloys with lithium, forms a thin film and closely adheres to the current collector, and thus current collecting properties are rarely degraded despite repeated expansion and contraction of the negative electrode caused by lithium intercalation and deintercalation.

However, the production cost for forming an active material by sputtering or vapor deposition as described above is high, and this approach is not practical. It is practical to form an active material by less costly electroplating; however, silicon is difficult to electroplate. Moreover, tin, which is easy to electroplate, has issues of poor discharge flatness and difficulty in using as an electrode of a battery.

Another metal that alloys with lithium is bismuth (Bi). Bi forms compounds, LiBi and Li₃Bi, with lithium (Li). The potential of LiBi is not much different from the potential of Li₃Bi. In contrast, tin, which has poor discharge flatness, forms several compounds with lithium, and the potentials of the compounds significantly differ from one another. In other words, unlike tin, Bi does not have properties of forming multiple compounds with lithium having significantly different potentials from one another. Thus, an electrode that contains Bi as the active material has excellent discharge flatness due to the flat potential. Thus, an electrode that contains Bi as the active material is considered to be suitable as an electrode of a battery.

However, Bi has poor malleability and ductility and is difficult to produce metal sheets or foils therefrom; thus, the obtained form is either beads or powder. Thus, an electrode produced by applying a Bi powder to a current collector is being explored as the electrode containing Bi as the active material. However, the electrode produced by using a Bi powder undergoes pulverization as charging and discharging are repeated, and the current collecting properties are thereby degraded; thus, sufficient cycle characteristics have not been obtained. For example, in NPL 1, an electrode containing Bi as an active material is prepared by using a Bi powder and polyvinylidene fluoride (PVdF) or polyimide (PI) as a binder. In NPL 1, a battery produced by using this electrode is charged and discharged. However, the results of the initial charge-discharge curve and the cycle characteristics of the produced electrode are very poor. Although measurement is taken at a very low-rate equivalent to 0.042 IT, the initial charge-discharge efficiency is low, the cycle deterioration is extensive, and the battery is far from practical application. Regarding the cycle deterioration, NPL 1 points out that the active material becomes pulverized as the Bi active material expands during Li intercalation and contracts during Li deintercalation, and presumably thus the electron conduction paths no longer form and the capacity decreases.

The present inventors have focused on Bi which does not have a property of forming, with Li, multiple compounds having large potential difference and which has excellent discharge flatness, and have conducted extensive studies on batteries with which cycle characteristics can be improved. As a result, the inventors have arrived at a novel technical conception that, when BiNi having a particular crystal structure, namely, a crystal structure of space group C2/m, is used as the active material, the battery exhibits improved cycle characteristics.

The inventors have taken a step further to investigate on batteries that use BiNi as the active material.

When a battery that contains, as the active material, Bi prepared by using a Bi powder is repeatedly charged and discharged, the capacity sometimes decreases to 10% or less of the initial discharge capacity after about 20 cycles. In contrast, a battery that uses, as the active material, BiNi having the aforementioned particular crystal structure can retain a discharge capacity greater than or equal to 50% of the initial discharge capacity after about, for example, 50 charge-discharge cycles, and the cycle characteristics are improved. However, even the battery that uses, as the active material, BiNi having the aforementioned particular crystal structure has an issue in that the discharge capacity retention ratio decreases to 40% or less of the initial discharge capacity after about 100 charge-discharge cycles.

The inventors have conducted further studies and have found that the notable capacity decrease from the initial capacity after about 100 charge-discharge cycles is attributable to the following cause. First, the charge-discharge cycles cause a phenomenon in which the active material layer containing BiNi expands during Li ion intercalation and contracts during Li ion deintercalation, and thereby generate voids within the active material layer. It has been found that the non-aqueous electrolyte solution enters the generated voids and destroys the structure of the active material layer, and the electron conduction paths in the active material layer decrease as a result.

The present inventors have conducted extensive studies and found the cycle characteristics can be improved when the electrode containing BiNi having the aforementioned particular crystal structure as the active material has an electrolyte layer formed by a solid electrolyte that does not flow inside the battery during the charge-discharge cycles of the battery. Thus, the present disclosure has been completed.

### (Summary of one aspect of the present disclosure)

A battery according to a first aspect of the present disclosure includes:
a first electrode;
a second electrode; and
a solid electrolyte layer disposed between the first electrode and the second electrode,
in which the first electrode includes:
   a current collector, and
   an active material layer disposed between the current collector and the solid electrolyte layer,
the active material layer contains BiNi, and
the BiNi has a crystal structure of space group C2/m.

The battery of the first aspect includes an electrode that contains, as an active material, BiNi having a crystal structure of space group C2/m. Thus, the cycle characteristics of the battery can be improved. Furthermore, according to the battery of the first aspect, the electrolyte layer is a solid electrolyte layer. Thus, the electrolyte does not enter the active material layer even when expansion and contraction of the BiNi-containing active material are repeated by charging and discharging, and thus the decrease in electron conduction paths in the active material layer can be reduced. Therefore, the battery of the first aspect has improved cycle characteristics.

In a second aspect, for example, in the battery of the first aspect, in an X-ray diffraction pattern of the active material layer obtained by surface X-ray diffractometry with Cu-Kα radiation, when a height intensity of a maximum peak present in a diffraction angle 2θ range greater than or equal to 29° and less than or equal to 31° is represented by I(1) and when a height intensity of a maximum peak present in a diffraction angle 2θ range greater than or equal to 41° and less than or equal to 43° is represented by I(2), a ratio I(2)/I(1) of the I(2) to the I(1) may be less than or equal to 0.28.

The battery of the second aspect has high initial efficiency and improved cycle characteristics.

In a third aspect of the present disclosure, for example, in the battery of the first or second aspect, the active material layer may contain at least one selected from the group consisting of LiBi and Li₃Bi.

The battery of the third aspect has a further improved capacity and improved cycle characteristics.

In a fourth aspect of the present disclosure, for example, in the battery of any one of the first to third aspects, the active material layer may be free of an electrolyte.

According to the fourth aspect, a battery that has a larger per-volume capacity and improved cycle characteristics is obtained.

In a fifth aspect of the present disclosure, for example, in the battery of any one of the first to fourth aspects, the active material layer may contain the BiNi as a main component of an active material.

According to the fifth aspect, a further improved capacity and improved cycle characteristics are obtained.

In a sixth aspect of the present disclosure, for example, in the battery of the fifth aspect, the active material layer may contain substantially only the BiNi as the active material.

According to the sixth aspect, a further improved capacity and improved cycle characteristics are obtained.

In a seventh aspect of the present disclosure, for example, in the battery of any one of the first to sixth aspects, the current collector may contain Ni.

The battery of the seventh aspect has a further improved capacity and improved cycle characteristics.

In an eighth aspect of the present disclosure, for example, in the battery of any one of the first to seventh aspects, the active material layer may be a heat-treated plating layer.

According to the eighth aspect, a battery that has a larger per-volume capacity and improved cycle characteristics is obtained.

In a ninth aspect of the present disclosure, for example, in the battery of any one of the first to eighth aspects, the solid electrolyte layer may contain a halide solid electrolyte, and the halide solid electrolyte may be substantially free of sulfur.

The battery of the ninth aspect has a further improved capacity and improved cycle characteristics.

In a tenth aspect of the present disclosure, for example, in the battery of any one of the first to eighth aspects, the solid electrolyte layer may contain a sulfide solid electrolyte.

The battery of the tenth aspect has a further improved capacity and improved cycle characteristics.

In an eleventh aspect of the present disclosure, for example, in the battery of any one of the first to tenth aspects, the first electrode may be a negative electrode, and the second electrode may be a positive electrode.

The battery of the eleventh aspect has a further improved capacity and improved cycle characteristics.

A method for manufacturing electrode according to a twelfth aspect of the present disclosure includes forming a Bi plating layer on a Ni-containing current collector by an electroplating method; and heating the current collector and the Bi plating layer to cause Ni contained in the current collector to diffuse into the Bi plating layer so as to obtain an electrode in which an active material layer containing BiNi is formed on the current collector.

According to the method of the twelfth aspect, a battery that can achieve improved cycle characteristics can be produced.

In a thirteenth aspect of the present disclosure, for example, in the method of the twelfth aspect, the BiNi may have a crystal structure of a space group C2/m.

According to the method of the thirteenth aspect, an electrode that can realize a battery having further improved cycle characteristics can be produced.

In a fourteenth aspect of the present disclosure, for example, in the method of the twelfth or thirteenth aspect, the current collector and the Bi plating layer may be heated at a temperature higher than or equal to 250°C.

According to the method of the fourteenth aspect, since an electrode that contains substantially only BiNi as the active material can be produced, an electrode that can realize a battery having further improved cycle characteristics can be produced.

### (Embodiments of the present disclosure)

Hereinafter, the embodiments of the present disclosure are described with reference to the drawings. All of the descriptions below are comprehensive or specific examples. The numerical values, compositions, shapes, film thickness, electrical characteristics, secondary battery structure, etc., indicated below are merely examples, and do not limit the present disclosure.

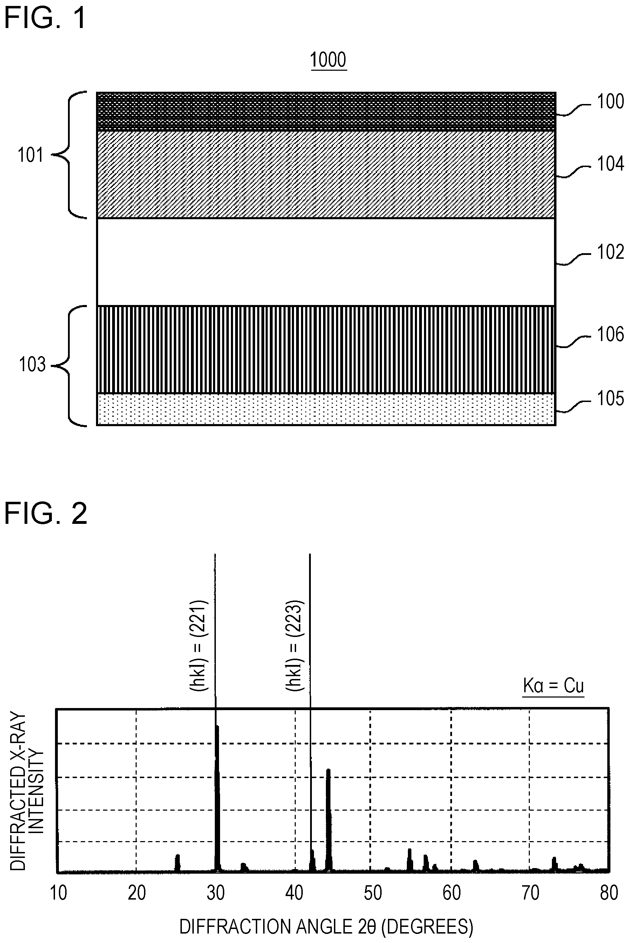

Fig. 1 is a schematic cross-sectional view of a structural example of a battery 1000 according to an embodiment of the present disclosure.

The battery 1000 has a first electrode 101, a second electrode 103, and a solid electrolyte layer 102 disposed between the first electrode 101 and the second electrode 103. The first electrode 101 includes a current collector 100 and an active material layer 104 disposed between the current collector 100 and the solid electrolyte layer 102. The active material layer 104 contains BiNi. This BiNi has a monoclinic crystal structure of space group C2/m.

In the battery 1000, the electrolyte layer is the solid electrolyte layer 102. Thus, the electrolyte is prevented from entering the active material layer 104 even when the active material layer 104 containing BiNi as the active material is repeatedly expanded and contracted by charging and discharging. Thus, the decrease in the electron-conducting paths in the active material layer 104 caused by the repeated charging and discharging is reduced. Thus, the battery 1000 exhibits improved cycle characteristics.

The battery 1000 is, for example, a lithium secondary battery. Hereinafter, an example in which the metal ions that are intercalated into and deintercalated from the active material layer 104 in the first electrode 101 and the second electrode 103 during charging and discharging of the battery 1000 are lithium ions is described.

The active material layer 104 may contain BiNi as a main component. Here, the phrase "the active material layer 104 contains BiNi as a main component" is defined as that "the BiNi content in the active material layer 104 is greater than or equal to 50 mass%". The BiNi content in the active material layer 104 can be determined by, for example, performing elemental analysis by energy dispersive X-ray spectroscopy (EDX) to confirm the presence of Bi and Ni in the active material layer 104 and then performing Rietveld analysis on the X-ray diffraction results of the active material layer 104 to calculate the ratios of the compounds contained therein.

According to the aforementioned features, improved charge-discharge cycle characteristics are obtained.

The active material layer 104 that contains BiNi as a main component may be constituted by a thin film of BiNi (hereinafter, referred to as a "BiNi thin film").

In an X-ray diffraction pattern of the active material layer 104 obtained by surface X-ray diffractometry with Cu-Kα radiation, the ratio I(2)/I(1) of a height intensity I(2) of the maximum peak present in the diffraction angle 2θ range greater than or equal to 41° and less than or equal to 43° to a height intensity I(1) of the maximum peak present in the diffraction angle 2θ range greater than or equal to 29° and less than or equal to 31° may be less than or equal to 0.28.

Here, in an X-ray diffraction pattern, the maximum peak present in the diffraction angle 2θ range greater than or equal to 29° and less than or equal to 31° corresponds to the peak of the (2, 2, 1) plane of BiNi which is an intermetallic compound. Furthermore, in an X-ray diffraction pattern, the maximum peak present in the diffraction angle 2θ range greater than or equal to 41° and less than or equal to 43° corresponds to the peak of the (2, 2, 3) plane of the intermetallic compound, BiNi. The feature that the peak intensity ratio I(2)/I(1) is less than or equal to 0.28 means that, in a surface of the active material layer 104, the ratio of the (2, 2, 3) plane to the (2, 2, 1) plane of BiNi having a monoclinic crystal structure of space group C2/m is low. In other words, in a surface of the active material layer 104, the orientation of the (2, 2, 1) plane is stronger. The active material layer 104 that has a surface that has such an orientation in the crystal structure of BiNi can exhibit high adhesion to the current collector 100. Thus, due to this surface orientation of the active material layer 104, degradation of the current collecting properties rarely occurs despite repeated expansion and contraction of the active material layer 104 caused by charging and discharging. Thus, the battery 1000 of the present disclosure can have further improved cycle characteristics and a further improved capacity.

The X-ray diffraction pattern of the active material layer 104 can be acquired by θ-2θ X-ray diffractometry with Cu-Kα radiation having wavelengths of 1.5405 Å and 1.5444 Å, in other words, 0.15405 nm and 0.15444 nm.

The diffraction angle of a peak in an X-ray diffraction pattern is defined as an angle that indicates the maximum intensity of a peak having an SN ratio (that is, the ratio of the signal S to the background noise N) greater than or equal to 1.3 and a half width less than or equal to 10°. The half width refers to the width indicated by the difference between two diffraction angles at which the intensity of the X-ray diffraction peak is one half of the maximum intensity I_{MAX} of the peak.

The active material layer 104 constituted by a BiNi thin film that contains BiNi as a main component and satisfies the aforementioned surface orientation can be produced by, for example, electroplating. A method for producing a first electrode 101 by producing the active material layer 104 by electroplating is, for example, as follows.

First, a substrate for electroplating is prepared. In the first electrode 101, for example, the current collector 100 serves as a substrate. For example, a Ni-containing current collector is prepared as the collector 100. The method for producing a first electrode 101 includes, for example, forming a Bi plating layer on a Ni-containing current collector by electroplating, and heating the current collector and the Bi plating layer to allow Ni contained in the current collector to diffuse into the Bi plating layer so as to obtain an electrode in which a BiNi-containing active material layer is formed on the current collector. The temperature of heating the Bi plating layer is, for example higher than equal to 250°C and may be higher than equal to 350°C.

The method for producing the first electrode 101 will now be described in further detail.

First, a substrate for electroplating is prepared. In the first electrode 101, for example, the current collector 100 serves as a substrate. For example, a nickel foil is prepared as the current collector 100. After the nickel foil is preliminarily degreased with an organic solvent, one surface of the nickel foil is masked, and the nickel foil is immersed in an acidic solvent to perform degreasing and to activate the nickel foil surface. The activated nickel foil is connected to a power supply so that current can be applied. The nickel foil connected to the power supply is immersed in a bismuth plating bath. For example, an organic acid bath containing Bi³⁺ ions and an organic acid is used as the bismuth plating bath. Next, electrical current is applied to the nickel foil while the current density and application time are controlled so as to electroplate the un-masked surface of the nickel foil with Bi. After electroplating, the nickel foil is recovered from the plating bath, the mask is removed, and the nickel foil is washed with pure water and dried. Through these steps, a Bi plating layer is formed on the surface of the nickel foil. Here, the bismuth plating bath used in preparing the Bi plating layer is not particularly limited, and can be appropriately selected from known bismuth plating baths that can deposit elemental Bi thin films. For the bismuth plating bath, an organic sulfonic acid bath, a gluconic acid and ethylenediaminetetraacetic acid (EDTA) bath, or a citric acid and EDTA bath can be used as the organic acid bath. Furthermore, for example, a sulfuric acid bath can be used as the bismuth plating bath. Furthermore, additives may be added to the bismuth plating bath.

Here, the target thickness of the Bi plating layer prepared by Bi electroplating and the thickness of the Bi plating layer actually prepared are indicated in Table 1.

A sample of the Bi plating layer was prepared by the same method as in Example 1 described below. However, the length of time the electrical current is applied to the nickel foil serving as the plating substrate was adjusted by targeting a plating thickness of 5 µm to prepare a sample. The thickness of the obtained Bi plating layer was measured with an X-ray fluorescence analyzer SEA6000VX produced by Seiko Instruments Inc. The average thicknesses of the Bi layers of the five samples were, respectively, 5.7 µm, 5.1 µm, 5.1 µm, 5.7 µm, and 5.8 µm.

**[Table 1]**

| | Thickness target: 5 µm | | | | |
|---|---|---|---|---|---|
| Sample No. | 1 | 2 | 3 | 4 | 5 |
| Plating thickness µm | 5.7 | 5.1 | 5.1 | 5.7 | 5.8 |

Next, the nickel foil and the Bi plating layer on the nickel foil are heated. Due to this heat treatment, solid-phase diffusion of Ni from the nickel foil to the Bi plating layer occurs, and thus an active material layer constituted by a BiNi thin film can be prepared. Here, solid-phase diffusion of Ni from the nickel foil to the Bi plating layer occurs by heat-treating the sample, which is obtained by electroplating a nickel foil with Bi, at a temperature higher than or equal to 250°C in a non-oxidizing atmosphere for 30 minutes or longer but shorter than 100 hours, for example, and thus an active material layer constituted by a BiNi thin film can be prepared.

For the aforementioned sample prepared by electroplating the nickel foil with Bi targeting a thickness of 5 µm, the heat treatment is conducted in an argon atmosphere at a temperature of 400°C for 60 hours to form an active material layer constituted by a BiNi thin film. Structural analysis of the surface of the active material layer constituted by the prepared BiNi thin film was also carried out by surface X-ray diffractometry.

Fig. 2 is a graph indicating one example of an X-ray diffraction pattern of an active material layer constituted by a BiNi thin film prepared on a nickel foil. The X-ray diffraction pattern was acquired from the surface of the active material layer, that is, in the thickness direction of the active material layer 104, by a θ-2θ method with Cu-Kα radiation having wavelengths of 1.5405 Å and 1.5444 Å as X-rays by using an X-ray diffractometer (MiNi Flex produced by RIGAKU Corporation). The X-ray diffraction pattern illustrated in Fig. 2 identified phases of BiNi having a crystal structure of space group C2/m and Ni contained in the nickel foil serving as a current collector and in the active material layer.

From the X-ray diffraction pattern of the active material layer obtained by surface X-ray diffractometry with Cu-Kα radiation illustrated in Fig. 2, the ratio I(2)/I(1) of the height intensity I(2) of the maximum peak present in the diffraction angle 2θ range greater than or equal to 41° and less than or equal to 43° to the height intensity I(1) of the maximum peak present in the diffraction angle 2θ range greater than or equal to 29° and less than or equal to 31° is calculated. The ratio I(2)/I(1) was less than or equal to 0.28.

The results of the aforementioned X-ray diffraction pattern indicate that, in the surface of the active material layer 104 prepared by electroplating a Ni-containing current collector 100 with Bi to form a Bi plating layer and then heating the current collector 100 together with the Bi plating layer on the current collector 100, the ratio of the (2, 2, 3) plane to the (2, 2, 1) plane of BiNi having a monoclinic crystal structure of space group C2/m is low. In other words, in a surface of the active material layer 104, the orientation of the (2, 2, 1) plane is strong. This reveals that, by forming a Bi plating layer on a Ni-containing current collector and heat-treating the obtained Bi plating layer on the Ni-containing current collector, the surface can be oriented to the (2, 2, 1) plane of BiNi having a monoclinic crystal structure of space group C2/m. The electrode that includes an active material layer constituted by a BiNi thin film having such an orientation can further improve the cycle characteristics of the battery.

In the description below, the features of the battery 1000 of the present embodiment are described in more detail by using, as one example, the case in which the first electrode 101 is a negative electrode and the second electrode 103 is a positive electrode.

### [First electrode]

As mentioned above, the first electrode 101 includes the current collector 100 and the active material layer 104. The features of the active material layer 104 are as described above. The first electrode 101 functions as a negative electrode. Thus, the active material layer 104 contains a negative electrode active material that has properties of intercalating and deintercalating lithium ions. The active material layer 104 contains BiNi that has a crystal structure of space group C2/m, and BiNi functions as a negative electrode active material. The active material layer 104 contains BiNi as an active material.

Bi is a metal element that alloys with lithium. Meanwhile, since Ni does not alloy with lithium, a Ni-containing alloy puts less load onto the crystal structure of the negative electrode active material during intercalation and deintercalation of lithium atoms associated with charging and discharging, and presumably thus the decrease in capacity retention ratio of the battery is reduced. When BiNi functions as a negative electrode active material, Bi alloys with lithium during charging, and lithium is intercalated as a result. In other words, in the active material layer 104, a lithium bismuth alloy is generated during charging of the battery 1000. The lithium bismuth alloy generated contains, for example, at least one selected from the group consisting of LiBi and Li₃Bi. In other words, during charging of the battery 1000, the active material layer 104 contains, for example, at least one selected from the group consisting of LiBi and Li₃Bi. During discharging of the battery 1000, the lithium bismuth alloy deintercalates lithium and returns to BiNi.

BiNi serving as a negative electrode active material undergoes the following reactions, for example, during charging and discharging of the battery 1000. Note that the examples of the reactions below are the examples in which the lithium bismuth alloy generated during charging is Li₃Bi.
Charging: BiNi + 3Li⁺ + 3e' → Li₃Bi + Ni
Discharging: Li₃Bi + Ni → BiNi + 3Li⁺ + 3e'

The active material layer 104 may contain substantially only BiNi as the active material. In such a case, the battery 1000 can exhibit an improved capacity and improved cycle characteristics. Here, the "active material layer 104 contains substantially only BiNi as the active material" means, for example, that the amount of the active materials other than BiNi is less than or equal to 1 mass% of the active material contained in the active material layer 104. The active material layer 104 may contain only BiNi as the active material.

The active material layer 104 does not have to contain an electrolyte. For example, the active material layer 104 may be a layer composed of nickel and BiNi and/or a lithium bismuth alloy generated during charging.

The active material layer 104 may be disposed to be in direct contact with the surface of the current collector 100.

The active material layer 104 may have a thin film shape.

The active material layer 104 may be a heat-treated plating layer. The active material layer 104 may be a heat-treated plating layer disposed to be in direct contact with the surface of the current collector 100. In other words, as described above, the active material layer 104 may be a layer formed by heat-treating a Bi plating layer formed on a

### Ni-containing current collector 100.

When the active material layer 104 is a heat-treated plating layer disposed to be in direct contact with the surface of the current collector 100, the active material layer 104 firmly adheres to the current collector 100. As a result, degradation of the current collecting properties of the first electrode 101 caused by repeated expansion and contraction of the active material layer 104 can be further reduced. Thus, the battery 1000 exhibits improved cycle characteristics. Furthermore, when the active material layer 104 is a heat-treated plating layer, the active material layer 104 contains a high concentration of Bi, which alloys with lithium, and thus a further larger capacity can be realized.

The active material layer 104 may contain materials other than BiNi.

The active material layer 104 may further contain a conductive material.

Examples of the conductive material include carbon materials, metals, inorganic compounds, and conductive polymers. Examples of the carbon materials include graphite, acetylene black, carbon black, Ketjen black, carbon whiskers, needle coke, and carbon fibers. Examples of the graphite include natural graphite and artificial graphite. Examples of the natural graphite include vein graphite and flake graphite. Examples of the metals include copper, nickel, aluminum, silver, and gold. Examples of the inorganic compound include tungsten carbide, titanium carbide, tantalum carbide, molybdenum carbide, titanium boride, and titanium nitride. These materials may be used alone or as a mixture of two or more.

The active material layer 104 may further contain a binder.

Examples of the binder include fluororesins, thermoplastic resins, ethylene propylene diene monomer (EPDM) rubber, sulfonated EPDM rubber, and natural butyl rubber (NBR). Examples of the fluororesins include polytetrafluoroethylene (PTFE), polyvinylidene fluoride (PVdF), and fluororubber. Examples of the thermoplastic resins include polypropylene and polyethylene. These materials may be used alone or as a mixture of two or more.

The thickness of the active material layer 104 is not particularly limited and may be, for example, greater than or equal to 1 µm and less than or equal to 100 µm.

The material for the current collector 100 is, for example, an elemental metal or an alloy. More specifically, an elemental metal or an alloy that contains at least one selected from the group consisting of copper, chromium, nickel, titanium, platinum, gold, aluminum, tungsten, iron, and molybdenum may be used. The current collector 100 may be composed of stainless steel.

The current collector 100 may contain nickel (Ni).

The current collector 100 may have a plate shape or a foil shape. From the viewpoint of ease of securing high conductivity, the negative electrode current collector may be a metal foil or a nickel-containing metal foil. Examples of the nickel-containing metal foil include a nickel foil and a nickel alloy foil. The nickel content of the metal foil may be greater than or equal to 50 mass% or greater than or equal to 80 mass%. In particular, the metal foil may be a nickel foil that substantially contains only nickel as the metal. The current collector 100 may be obtained by forming a Ni layer, such as a Ni plating layer, on a surface of a metal foil composed of a metal other than nickel or an alloy.

The current collector 100 may be a multilayer film.

### [Solid electrolyte layer]

The solid electrolyte contained in the solid electrolyte layer 102 may be a halide solid electrolyte, a sulfide solid electrolyte, an oxide solid electrolyte, a polymer solid electrolyte, or a complex hydride solid electrolyte.

The halide solid electrolyte refers to a solid electrolyte containing a halogen element. The halide solid electrolyte may contain oxygen in addition to the halogen element. The halide solid electrolyte does not contain sulfur (S).

The halide solid electrolyte may be, for example, a material represented by formula (1) below:

Li_{α}M_{β}X_{γ} Formula (1)

Here, α, β, and γ are each a value greater than 0, M is at least one selected from the group consisting of metal elements other than Li and metalloids, and X is at least one selected from the group consisting of F, Cl, Br, and I.

The "metalloids" are B, Si, Ge, As, Sb, and Te.

The "metal elements" are all group 1 to 12 elements other than hydrogen in the periodic table and all group 13 to 16 elements other than B, Si, Ge, As, Sb, Te, C, N, P, O, S, and Se. In other words, these are a group of elements that can form cations in forming an inorganic compound with a halogen compound.

In formula (1), M may contain Y, and X may contain Cl and Br.

Examples of the halide solid electrolyte that may be used include Li₃(Ca, Y, Gd)X₆, Li₂MgX₄, Li₂FeX₄, Li(Al, Ga, In)X₄, Li3(Al, Ga, In)X₆, and LiI. Here, in these solid electrolytes, the element X is at least one selected from the group consisting of F, Cl, Br, and I. In the present disclosure, when the element in a formula is indicated as "(Al, Ga, In)", this means at least one element selected from the group of elements in the parentheses. In other words, "(Al, Ga, In)" has the same meaning as the "at least one selected from the group consisting of Al, Ga, and In". The same applies to other elements.

Another example of the halide solid electrolyte is a compound represented by LiₐMe_{b}Y_{c}X₆. Here, a + mb + 3c = 6 and c > 0. Me is at least one selected from the group consisting of metal elements other than Li and Y and metalloids. Here, m represents the valence of Me. The "metalloids" are B, Si, Ge, As, Sb, and Te. The "metal elements" are all group 1 to 12 elements (excluding hydrogen) in the periodic table and all group 13 to 16 elements (excluding B, Si, Ge, As, Sb, Te, C, N, P, O, S, and Se) in the periodic table.

In order to increase the ion conductivity of the halide solid electrolyte material, Me may be at least one selected from the group consisting of Mg, Ca, Sr, Ba, Zn, Sc, Al, Ga, Bi, Zr, Hf, Ti, Sn, Ta, and Nb. The halide solid electrolyte may be Li₃YCl₆, Li₃YBr₆, or Li₃YBrₚCl₆₋ₚ. Here, p satisfies 0 < p < 6.

The sulfide solid electrolyte refers to a solid electrolyte containing sulfur (S). The sulfide solid electrolyte may contain a halogen element in addition to sulfur.

Examples of the sulfide solid electrolyte that can be used include Li₂S-P₂S₅, Li₂S-SiS₂, Li₂S-B₂S₃, Li₂S-GeS₂, Li_{3.25}Ge_{0.25}P_{0.75}S₄, and Li₁₀GeP₂S₁₂.

Examples of the oxide solid electrolyte include NASICON solid electrolytes such as LiTi₂(PO₄)₃ and element substitution products thereof, perovskite solid electrolytes based on (LaLi)TiO₃, LISICON solid electrolytes such as Li₁₄ZnGe₄O₁₆, Li₄SiO₄, LiGeO₄, and element substitution products thereof, garnet solid electrolytes such as Li₇La₃Zr₂O₁₂ and element substitution products thereof, Li₃PO₄ and N substitution products thereof, and glass or glass ceramic based on a Li-B-O compound such as LiBO₂ or Li₃BO₃ doped with Li₂SO₄, Li₂CO₃, or the like.

The polymer solid electrolyte can be, for example, a compound between a polymer compound and a lithium salt. The polymer compound may have an ethylene oxide structure. The polymer compound having an ethylene oxide structure can contain a large amount of lithium salts. Thus, the ion conductivity can be further increased. Examples of the lithium salt that can be used include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from among the aforementioned lithium salts can be used alone. Alternatively, a mixture of two or more lithium salts selected from among the aforementioned lithium salts can be used.

Examples of the complex hydride solid electrolyte that can be used include LiBH₄-LiI and LiBH₄-P₂S₅.

The solid electrolyte layer 102 may contain a halide solid electrolyte. The halide solid electrolyte is free of sulfur.

The solid electrolyte layer 102 may consist essentially of a halide solid electrolyte. In the present description, "consist essentially of" intends to allow inclusion of impurities at a content less than 0.1%. The solid electrolyte layer 102 may consist of a halide solid electrolyte.

The aforementioned features can increase the ion conductivity of the solid electrolyte layer 102. As a result, the decrease in energy density of the battery can be reduced.

The solid electrolyte layer 102 may further contain a binder. The same materials as the materials that can be used in the active material layer 104 can be used as the binder.

The solid electrolyte layer 102 may have a thickness greater than or equal to 1 µm and less than or equal to 500 µm. When the solid electrolyte layer 102 has a thickness greater than or equal to 1 µm, short circuiting between the first electrode 101 and the second electrode 103 rarely occurs. When the solid electrolyte layer 102 has a thickness less than or equal to 500 µm, the battery can operate at high output.

The shape of the solid electrolyte is not particularly limited. When the solid electrolyte is a powder material, the shape thereof may be, for example, a needle shape, a spherical shape, or an oval shape. For example, the solid electrolyte may have a particle shape.

For example, when the solid electrolyte has a particle shape (for example, a spherical shape), the median diameter of the solid electrolyte may be less than or equal to 100 µm or less than or equal to 10 µm.

In the present disclosure, the "median diameter" refers to the particle diameter at which the accumulated volume in a volume-based particle size distribution is 50%. The volume-based particle size distribution is, for example, measured by a laser diffraction measuring instrument or an image analyzer.

The solid electrolyte contained in the solid electrolyte layer 102 can be prepared by the following method.

Raw material powders are prepared so that a desired composition is achieved. Examples of the raw material powders include an oxide, a hydroxide, a halide, and an acid halide.

In one example where the desired composition is Li₃YBr₄Cl₂, LiBr, YCl, and YBr are mixed at a molar ratio of about 3:0.66:0.33. In order to cancel out compositional changes that could happen in the synthetic process, the raw materials powder may be mixed at a preliminarily adjusted molar ratio.

The raw material powders are mechanochemically reacted with one another in a mixer such as a planetary ball mill (in other words, by a mechanochemical milling method) so as to obtain a reaction product. The reaction product may be heat-treated in vacuum or in an inert atmosphere. Alternatively, a mixture of raw material powders may be heat-treated in vacuum or in an inert atmosphere to obtain a reaction product. The heat treatment is desirably performed at a temperature higher than or equal to 100°C and lower than or equal to 300°C for 1 hour or longer. In order to suppress compositional changes during heat treatment, the raw material powders are desirably heat-treated in a sealed container such as a quartz tube.

A solid electrolyte of the solid electrolyte layer 102 is obtained by the method described above.

### [Second electrode]

The second electrode 103 functions as a positive electrode. The second electrode 103 contains a material that can intercalate and deintercalate metal ions such as lithium ions. This material is, for example, a positive electrode active material.

The second electrode 103 may include a current collector 105 and an active material layer 106. The active material layer 106 contains a positive electrode active material. The active material layer 106 is disposed between the current collector 105 and the solid electrolyte layer 102, for example.

The active material layer 106 may be disposed to be in direct contact with the surface of the current collector 105.

Examples of the positive electrode active material that can be used include lithium-containing transition metal oxides, transition metal fluorides, polyanion materials, fluorinated polyanion materials, transition metal sulfides, transition metal oxysulfides, and transition metal oxynitrides. Examples of the lithium-containing transition metal oxides include LiNi_{1-x-y}CoₓAl_{y}O₂ ((x + y) < 1), LiNi_{1-x-y}CoₓMn_{y}O₂ ((x + y) < 1), and LiCoO₂. In particular, when a lithium-containing transition metal oxide is used as the positive electrode active material, the production cost of the electrode can be reduced, and the average discharge voltage of the battery can be increased. For example, the positive electrode active material may contain Li(Ni, Co, Mn)O₂.

The examples of the material for the current collector 105 include metal materials. Examples of the metal materials include copper, stainless steel, iron, and aluminum.

The second electrode 103 may contain a solid electrolyte. The solid electrolytes that are described as examples of the material constituting the solid electrolyte layer 102 may be used as this solid electrolyte.

The positive electrode active material may have a median diameter greater than or equal to 0.1 µm and less than or equal to 100 µm. When the positive electrode active material has a median diameter greater than or equal to 0.1 µm, the positive electrode active material and the solid electrolyte can form an excellent dispersion state. As a result, the charge-discharge characteristics of the battery are improved. When the positive electrode active material has a median diameter less than or equal to 100 µm, lithium diffuses at an improved rate. As a result, the battery can operate at high output.

The positive electrode active material may have a median diameter greater than that of the solid electrolyte. In this manner, the positive electrode active material and the solid electrolyte can form an excellent dispersion state.

From the viewpoint of the energy density and output of the battery, in the second electrode 103, the ratio of the volume of the positive electrode active material to the total of the volume of the positive electrode active material and the volume of the solid electrolyte may be greater than or equal to 0.30 and less than or equal to 0.95.

In order to prevent the solid electrolyte from reacting with the positive electrode active material, a coating layer may be formed on the surface of the positive electrode active material. In this manner, the increase in reaction overvoltage of the battery can be reduced. Examples of the coating material contained in the coating layer include sulfide solid electrolytes, oxide solid electrolytes, and halide solid electrolytes.

The thickness of the second electrode 103 may be greater than or equal to 10 µm and less than or equal to 500 µm. When the thickness of the second electrode 103 is greater than or equal to 10 µm, a sufficient battery energy density can be secured. When the thickness of the second electrode 103 is less than or equal to 500 µm, the battery can operate at high output.

The second electrode 103 may contain a conductive material to increase electron conductivity.

The second electrode 103 may contain a binder.

The same materials as the materials that can be used in the active material layer 104 can be used as the conductive material and the binder.

For the purpose of facilitating lithium-ion exchange and improving the output characteristics of the battery, the second electrode 103 may contain a nonaqueous electrolyte solution, a gel electrolyte, or an ionic liquid.

The nonaqueous electrolyte solution contains a non-aqueous solvent and a lithium salt dissolved in the nonaqueous solvent. Examples of the non-aqueous solvent include cyclic carbonate solvents, linear carbonate solvents, cyclic ether solvents, linear ether solvents, cyclic ester solvents, linear ester solvents, and fluorine solvents. Examples of the cyclic carbonate solvents include ethylene carbonate, propylene carbonate, and butylene carbonate. Examples of the linear carbonate solvents include dimethyl carbonate, ethyl methyl carbonate, and diethyl carbonate. Examples of the cyclic ether solvents include tetrahydrofuran, 1,4-dioxane, and 1,3-dioxolane. Examples of the linear ether solvents include 1,2-dimethoxyethane and 1,2-diethoxyethane. An example of the cyclic ester solvents is γ-butyrolactone. An example of the linear ester solvents is methyl acetate. Examples of the fluorine solvents include fluoroethylene carbonate, methyl fluoropropionate, fluorobenzene, fluoroethyl methyl carbonate, and fluorodimethylene carbonate. One non-aqueous solvent selected from these may be used alone. Alternatively, a mixture of two or more non-aqueous solvents selected from among these may be used.

Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from these may be used alone. Alternatively, a mixture of two or more lithium salts selected from among these may be used. The lithium salt concentration is, for example, greater than or equal to 0.5 mol/L and less than or equal to 2 mol/L.

A polymer material impregnated with a non-aqueous electrolyte solution can be used as the gel electrolyte. Examples of the polymer material include polyethylene oxide, polyacrylonitrile, polyvinylidene fluoride, polymethyl methacrylate, and polymers having ethylene oxide bonds.

Examples of the cations contained in the ionic liquid include:
(i) aliphatic linear quaternary salts such as tetraalkylammonium and tetraalkylphosphonium;
(ii) aliphatic cyclic ammoniums such as pyrrolidiniums, morpholiniums, imidazoliniums, tetrahydropyrimidiniums, piperaziniums, and piperidiniums; and
(iii) nitrogen-containing heterocyclic aromatic cations such as pyridiniums and imidazoliums.

Examples of the anions contained in the ionic liquid include PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻, and C(SO₂CF₃)₃⁻.

The ionic liquid may contain a lithium salt.

Although the structure example in which the first electrode 101 is a negative electrode and the second electrode 103 is a positive electrode has been described heretofore, the first electrode 101 may be a positive electrode and the second electrode 103 may be a negative electrode.

When the first electrode 101 is a positive electrode and the second electrode 103 is a negative electrode, the active material layer 104 is a positive electrode active material layer. In other words, Bi contained in the active material layer 104 functions as a positive electrode active material. In such a case, the second electrode 103 serving as a negative electrode is made of, for example, lithium metal.

The battery 1000 includes the first electrode 101, the solid electrolyte layer 102, and the second electrode 103 as the basic features, and is enclosed in a sealed container so that air and moisture would not mix in. Examples of the shape of the battery 1000 include a coin shape, a cylinder shape, a prism shape, a sheet shape, a button shape, a flat shape, and a multilayer shape.

### EXAMPLES

In the description below, the details of the present disclosure are disclosed through Examples and Reference Examples. Examples described below are merely illustrative, and do not limit the present disclosure.

### (Example 1)

### <Preparation of first electrode>

After a nickel foil (10 cm × 10 cm, thickness: 10 µm) was preliminarily degreased with an organic solvent as a preliminary treatment, one surface of the nickel foil was masked, and the nickel foil was immersed in an acidic solvent to perform degreasing and to activate the nickel foil surface. To 1.0 mol/L methanesulfonic acid, bismuth methanesulfonate serving as a soluble bismuth salt was added so that the Bi³⁺ ion concentration was 0.18 mol/L so as to prepare a plating bath. The activated nickel foil was connected to a power supply so that current could be applied, and then immersed in the plating bath. Next, the un-masked surface of the nickel foil was electroplated with Bi by controlling the current density to 2 A/dm² so that the thickness of the plating layer was about 5 µm. After electroplating, the nickel foil was recovered from the acidic bath, the mask was removed, and the nickel foil was washed with pure water and dried. Subsequently, the nickel foil electroplated with Bi was heat-treated at 400°C for 60 hours in an argon atmosphere in an electric furnace. After the heat treatment, surface X-ray diffractometry was performed on the Bi plating layer on the nickel foil. The X-ray diffraction pattern obtained by this measurement is as indicated in Fig. 2. This X-ray diffraction pattern confirmed generation of BiNi that has a monoclinic crystal structure of space group C2/m. In other words, a multilayer body constituted by a current collector made of a nickel foil and an active material layer that was disposed to be in direct contact with the surface of the current collector and that was made of BiNi having a crystal structure of space group C2/m was obtained. Subsequently, the obtained multilayer body was punched out into a ϕ0.92 cm piece to obtain a first electrode. In other words, the first electrode of Example 1 was constituted by a current collector made of a nickel foil and an active material layer disposed on the current collector and made of a BiNi having a crystal structure of space group C2/m. In the active material layer of the first electrode of Example 1, the peak intensity ratio I(2)/I(1) was less than or equal to 0.28.

### <Preparation of solid electrolyte>

In an argon atmosphere having a dew point lower than or equal to -60°C (hereinafter referred to as a "dry argon atmosphere"), the raw material powders, LiBr, YCl₃, and YBr₃, were prepared at a molar ratio of LiBr:YCl₃:YBr₃ = 3:2/3:1/3. These raw material powders were crushed and mixed in a mortar into a mixed powder. The obtained mixture of the raw material powders was heat-treated in a dry argon atmosphere in an electric furnace at 500°C for 3 hours, as a result of which a heat-treated product was obtained. The obtained heat-treated product was crushed with a pestle in a mortar. As a result, a solid electrolyte having a composition represented by Li₃YBr₄Cl₂ was obtained.

### <Preparation of test cells>

In an insulating external cylinder having an inner diameter of 9.4 mm, a solid electrolyte Li₃YBr₄Cl₂ (80 mg) was stacked on the BiNi active material layer of the obtained first electrode serving as a working electrode, and then an indium-lithium alloy (molar ratio In:Li = 1:1) (200 mg) was stacked as a counter electrode to obtain a multilayer body. The indium-lithium alloy was prepared by pressing a small piece of a lithium foil onto an indium foil and diffusing lithium into indium. A pressure of 360 MPa was applied to the multilayer body to form a working electrode, a solid electrolyte layer, and a counter electrode. In the multilayer body, the thickness of the first electrode serving as a working electrode was 6 µm, the thickness of the solid electrolyte layer was 500 µm, and the thickness of the counter electrode was 15 µm.

Next, current collectors made from stainless steel were attached to the working electrode and the counter electrode, and current collecting leads were attached to the current collectors.

Lastly, the inside of the insulating external cylinder was shut out from the external atmosphere by using an insulating ferrule to seal the inside of the cylinder.

As a result, a test cell of Example 1 in which the first electrode having an active material layer made of a BiNi served as a working electrode and the lithium-indium alloy served as a counter electrode was obtained. Here, the prepared test cell is a unipolar test cell that uses a working electrode and a counter electrode, and is used to test performance of one of the electrodes in a secondary battery. To be more specific, an electrode to be tested is used as the working electrode, and an active material in an amount sufficient for the reaction at the working electrode is used in the counter electrode. Since the present test cell was used to test the performance of the first electrode serving as a negative electrode, a large excess of a lithium-indium alloy was used as the counter electrode as with the usual practice. The negative electrode tested for its performance by using such a test cell can be used in combination with a positive electrode that contains the positive electrode active material described in the aforementioned embodiment, for example, a Li-containing transition metal oxide, and thus can be used as a secondary battery.

### <Charge-discharge test>

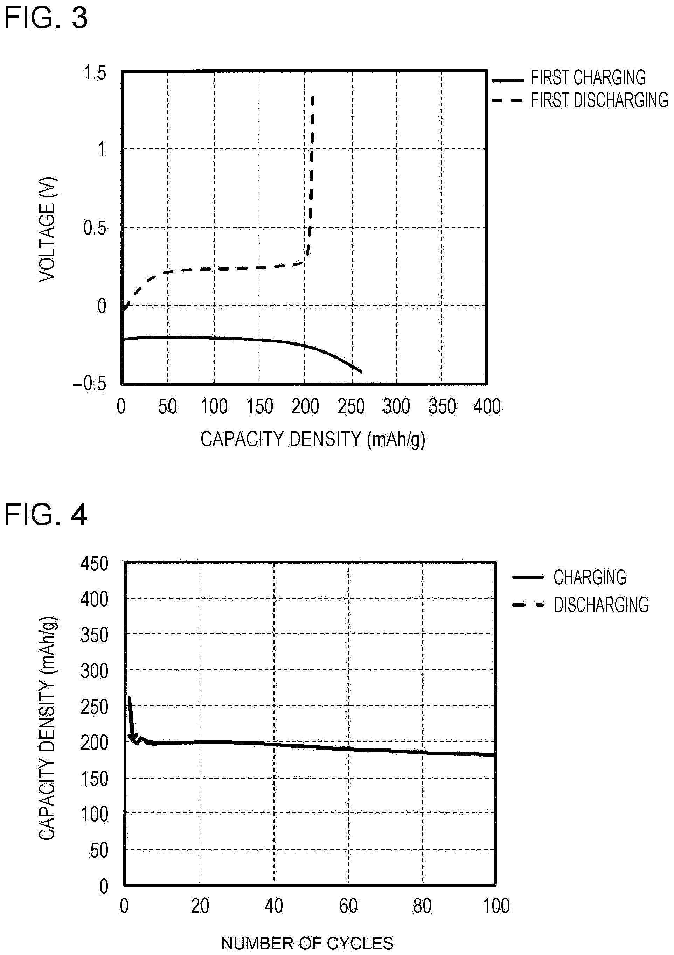

A charge-discharge test of the prepared test cell was conducted under the following conditions. Assuming that the theoretical capacity of Bi is 384 mAh/g from the weight of electroplated Bi, constant-current charging was carried out to -0.42 V (0.2 V vs Li⁺/Li) at a rate of 0.5 IT on a Bi basis, then discharging was carried out to 1.38 V (2.0 V vs Li⁺/Li), and then charging was carried out to -0.42 V (0.2 V vs Li⁺/Li). The charge-discharge test of the sample cell was performed in a 25°C constant temperature oven. Fig. 3 is a graph showing the results of the charge-discharge test of the test cell of Example 1. The initial charge capacity was about 260.2 mAh/g. The discharge capacity and the charge capacity thereafter were about 208.4 mAh/g.

### <Charge-discharge cycle test>

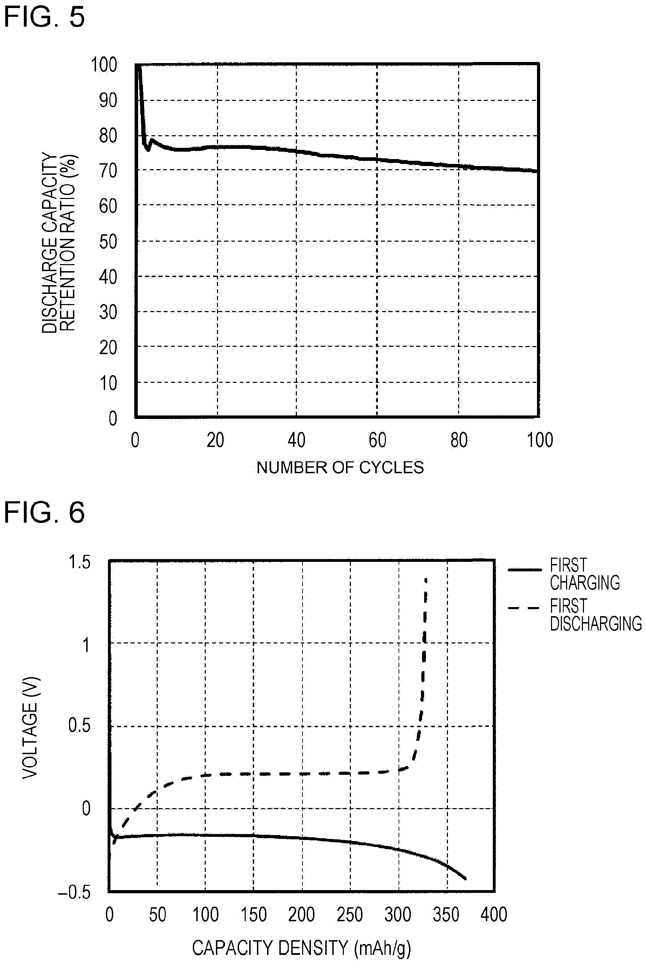

A charge-discharge cycle test was carried out to evaluate the cycle characteristics, where each cycle of charging and discharging was performed under the same conditions as in the charge-discharge test. Fig. 4 is a graph showing the results of the charge-discharge cycle test of the test cell of Example 1. Fig. 5 is a graph showing the discharge capacity retention ratio of the test cell of Example 1 with respect to the initial discharge capacity for each charge-discharge cycle. Fig. 5 demonstrates that a discharge capacity greater than or equal to 70% of the initial discharge capacity was retained even after 80 cycles.

### (Example 2)

### <Preparation of test cells>

A sulfide solid electrolyte Li₆PS₅Cl (produced by Ampcera, Inc., 80 mg) was used instead of Li₃YBr₄Cl₂. A test cell of Example 2 was obtained as with the test cell of Example 1 except for this point.

### <Charge-discharge test>

A charge-discharge test of the prepared test cell was conducted under the following conditions. Assuming that the theoretical capacity of Bi is 384 mAh/g from the weight of electroplated Bi, constant-current charging was carried out to -0.42 V (0.2 V vs Li⁺/Li) at a rate of 0.5 IT on a Bi basis, then discharging was carried out to 1.38 V (2.0 V vs Li⁺/Li), and then charging was carried out to -0.42 V (0.2 V vs Li⁺/Li). The charge-discharge test of the sample cell was performed in a 25°C constant temperature oven. Fig. 6 is a graph showing the results of the charge-discharge test of the test cell of Example 2. The initial charge capacity was about 368.2 mAh/g. The discharge capacity and the charge capacity thereafter were about 328.0 mAh/g.

### <Charge-discharge cycle test>

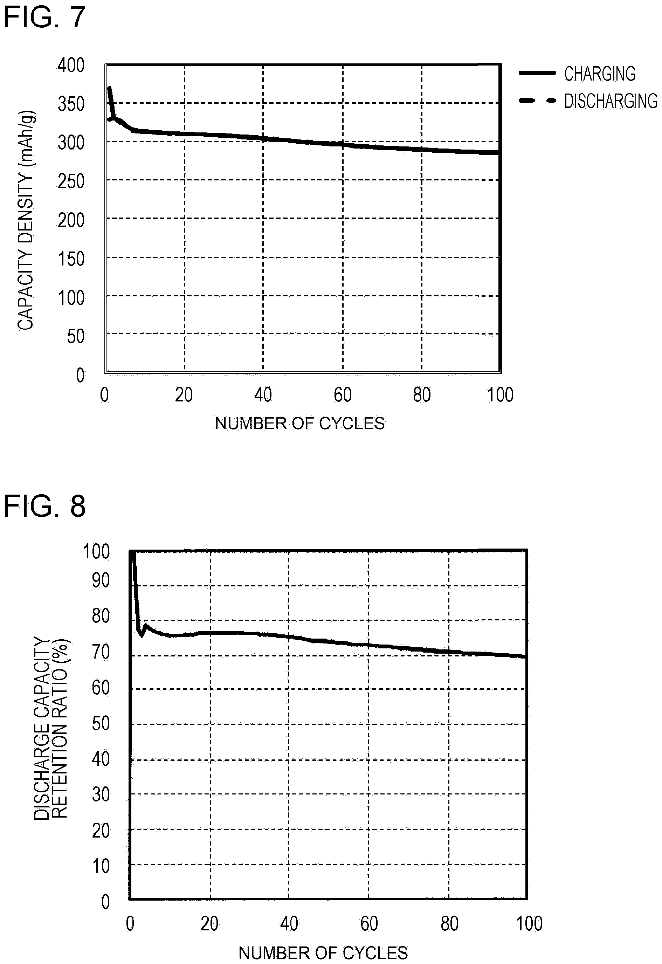

A charge-discharge cycle test was carried out to evaluate the cycle characteristics, where each cycle of charging and discharging was performed under the same conditions as in the charge-discharge test. Fig. 7 is a graph showing the results of the charge-discharge cycle test of the test cell of Example 2. Fig. 8 is a graph showing the discharge capacity retention ratio of the test cell of Example 2 with respect to the initial discharge capacity for each charge-discharge cycle. Fig. 8 demonstrates that a discharge capacity greater than or equal to 65% of the initial discharge capacity was retained even after 100 cycles.

### (Reference Example 1)

### <Preparation of first electrode>

A multilayer body constituted by a current collector made of a nickel foil and an active material layer that was disposed to be in direct contact with the surface of the current collector and that was made of BiNi having a crystal structure of space group C2/m was obtained as in Example 1 by plating the nickel foil with Bi and then performing a heat treatment. The obtained multilayer body was punched out into a 2 cm × 2 cm piece to obtain a first electrode. The thickness of the obtained first electrode was 12 µm.

### <Preparation of test cells>

The first electrode was used as the working electrode. A Li metal having a thickness of 0.34 µm was used as the counter electrode. The Li metal was double coated with a microporous separator (Celgard 3401 produced by Celgard, LLC and Asahi Kasei Corporation). A solution prepared by dissolving LiPF₆ in vinylene carbonate (VC) at a concentration of 1.0 mol/L was prepared as the electrolyte solution. As a result, a test cell of Reference Example 1 was obtained.

### <Charge-discharge cycle test>

The test cell of Reference example 1 was charged at a constant current of 0.6 mA to 0 V (vs Li⁺/Li) and then discharged to 2.0 V (vs Li⁺/Li). This cycle was assumed to constitute one cycle, and the charge-discharge cycle test was performed 25 cycles. The charge-discharge test of the sample cell was performed in a 25°C constant temperature oven. Here, a constant current value of 0.6 mA (0.15 mA/cm²) corresponds to 0.5 IT.

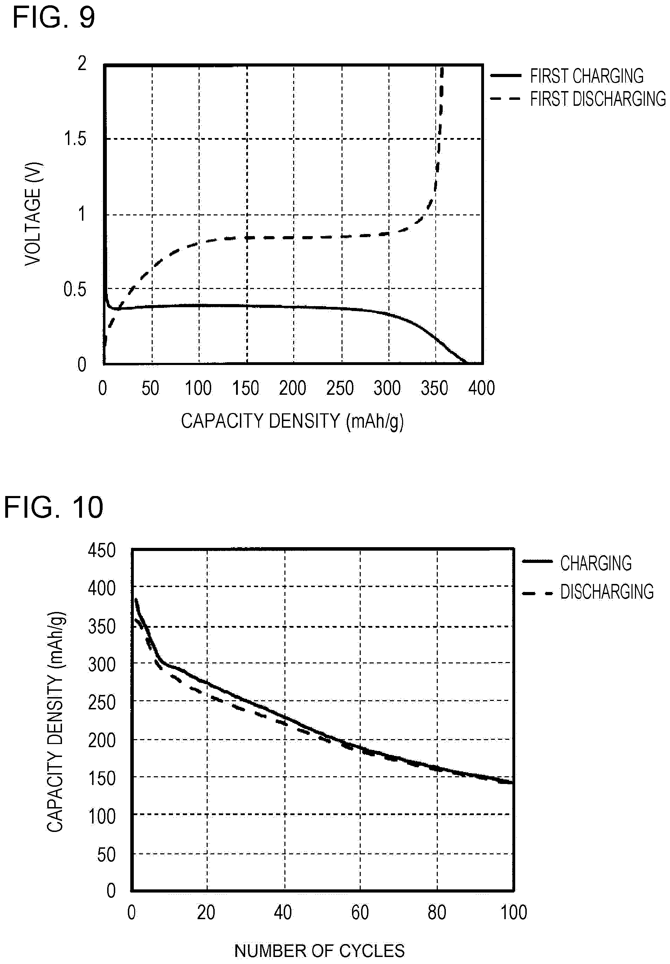

Fig. 9 is a graph showing the results of the charge-discharge test of the test cell of Reference Example 1. The initial charge capacity was about 384.0 mAh/g. The discharge capacity and the charge capacity thereafter were about 356.3 mAh/g.

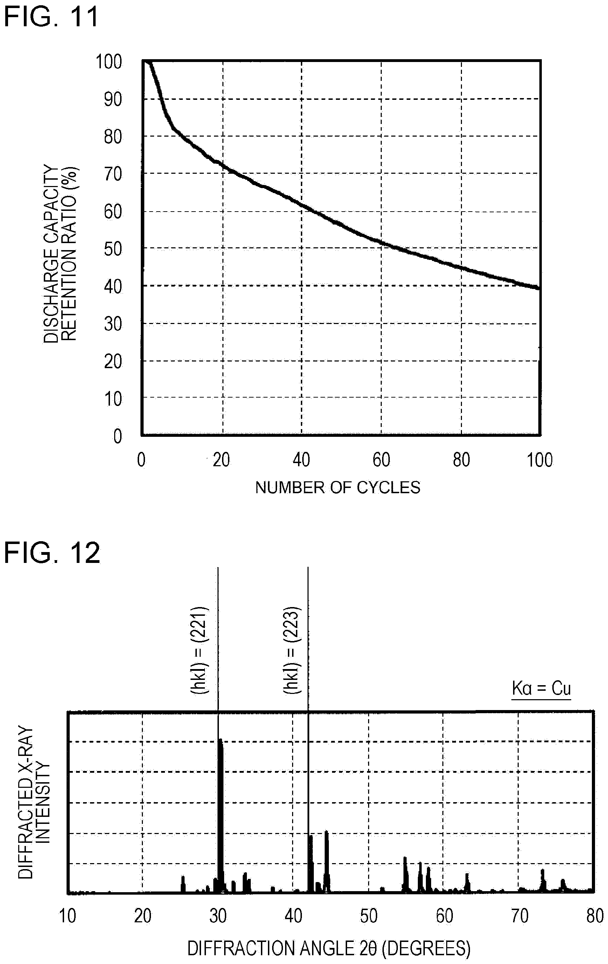

Fig. 10 is a graph showing the results of the charge-discharge cycle test of the test cell of Reference Example 1. Fig. 11 is a graph showing the discharge capacity retention ratio of the test cell of Reference Example 1 with respect to the initial discharge capacity for each charge-discharge cycle. As indicated in Fig. 11, the discharge capacity of the battery of Reference Example 1 decreased to 40% of the initial discharge capacity or less after about 100 cycles. This is presumably because, when the active material layer made of BiNi is repeatedly expanded and contracted by the repeated charging and discharging, the non-aqueous electrolyte solution enters voids formed in the active material layer made of BiNi, destroys the structure of the active material layer, and thereby decreases the electron-conducting paths inside the active material layer.

### (Example 3)

### <Preparation of first electrode>

As powder raw materials, Bi₂O₃ (bismuth trioxide "BIO10PB" produced by Kojundo Chemical Lab. Co., Ltd.), NiO ("NIO04PB" produced by Sumitomo Metal Mining Co., Ltd.), and carbon (Denka Black produced by Denka Company Limited) were mixed in a mortar. The molar ratios of Bi₂O₃, NiO, and carbon were Bi₂O₃:NiO:carbon = 2:4:5. The obtained mixture was heat-treated in a nitrogen atmosphere using an electric furnace to prepare a BiNi powder. The heat treatment was performed under the conditions of 800°C and 4 hours.

Fig. 12 is a graph indicating an X-ray diffraction pattern of the BiNi powder prepared from the powder raw materials in Example 3. The X-ray diffraction pattern was measured after disintegrating the heat-treated BiNi powder by using a mortar. The measurement was performed a θ-2θ method with Cu-Kα radiation having wavelengths of 1.5405 Å and 1.5444 Å as X-rays by using an X-ray diffractometer (MiNi Flex produced by RIGAKU Corporation). The obtained X-ray diffraction pattern confirmed generation of BiNi and that BiNi has a monoclinic crystal structure of space group C2/m. In the active material layer of the first electrode of Example 3, the peak intensity ratio I(2)/I(1) was greater than 0.28.

### <Preparation of solid electrolyte>

A solid electrolyte Li₃YBr₄Cl₂ was obtained as in Example 1.

### <Preparation of test cells>

The BiNi powder which was the active material of the obtained first electrode was used as the working electrode. In an insulating external cylinder having an inner diameter of 9.4 mm, a solid electrolyte Li₃YBr₄Cl₂ (80 mg) was stacked on the BiNi powder (10 mg) which was the active material in the obtained first electrode, and then an indium-lithium alloy (molar ratio In:Li = 1: 1) (200 mg) was stacked as a counter electrode to obtain a multilayer body. The indium-lithium alloy was prepared by pressing a small piece of a lithium foil onto an indium foil and diffusing lithium into indium. A pressure of 360 MPa was applied to the multilayer body to form a working electrode, a solid electrolyte layer, and a counter electrode. In the multilayer body, the thickness of the first electrode serving as a working electrode was 6 µm, the thickness of the solid electrolyte layer was 500 µm, and the thickness of the counter electrode was 15 µm.

Next, current collectors made from stainless steel were attached to the working electrode and the counter electrode, and current collecting leads were attached to the current collectors.

Lastly, the inside of the insulating external cylinder was shut out from the external atmosphere by using an insulating ferrule to seal the inside of the cylinder.

As a result, a test cell of Example 3 in which the first electrode having an active material layer made of a BiNi powder served as a working electrode and the lithium-indium alloy served as a counter electrode was obtained. As with the test cell of Example 1, the negative electrode tested for its performance by using such a test cell can be used in combination with a positive electrode that contains the positive electrode active material described in the aforementioned embodiment, for example, a Li-containing transition metal oxide, and thus can be used as a secondary battery.

### <Charge-discharge test>

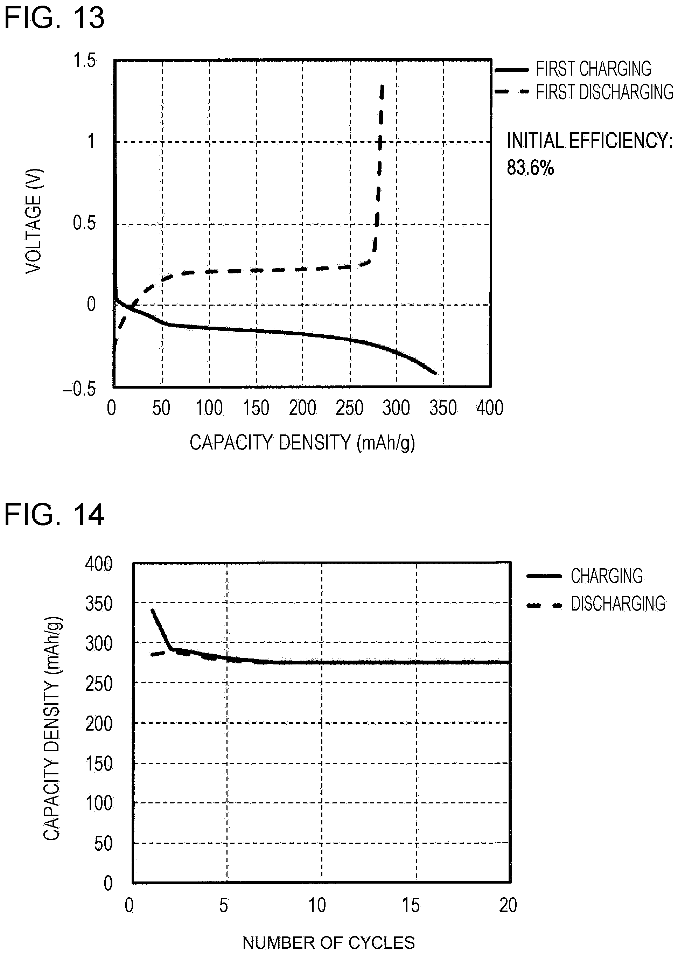

A charge-discharge test of the prepared test cell was conducted under the following conditions. The Bi weight contained in the BiNi powder was calculated, and, assuming that the theoretical capacity of Bi is 384 mAh/g from the weight of Bi, constant-current charging was carried out to -0.42 V (0.2 V vs Li⁺/Li) at a rate of 0.1 IT on a Bi basis, then discharging was carried out to 1.38 V (2.0 V vs Li⁺/Li), and then charging was carried out to -0.42 V (0.2 V vs Li⁺/Li). The charge-discharge test of the sample cell was performed in a 25°C constant temperature oven. Fig. 13 is a graph showing the results of the charge-discharge test of the test cell of Example 3. The initial charge capacity was about 340.7 mAh/g. The discharge capacity and the charge capacity thereafter were about 285.0 mAh/g. The initial charge-discharge efficiency was 83.6%.

### <Charge-discharge cycle test>

A charge-discharge cycle test was carried out to evaluate the cycle characteristics, where each cycle of charging and discharging was performed under the same conditions as in the charge-discharge test. Fig. 14 is a graph showing the results of the charge-discharge cycle test of the test cell of Example 3. Fig. 14 demonstrates that stable charge-discharge cycles are possible until 20 cycles.

### (Example 4)

### <Preparation of test cells>

A test cell of Example 4 was prepared as with the test cell of Example 1.

### <Charge-discharge test>

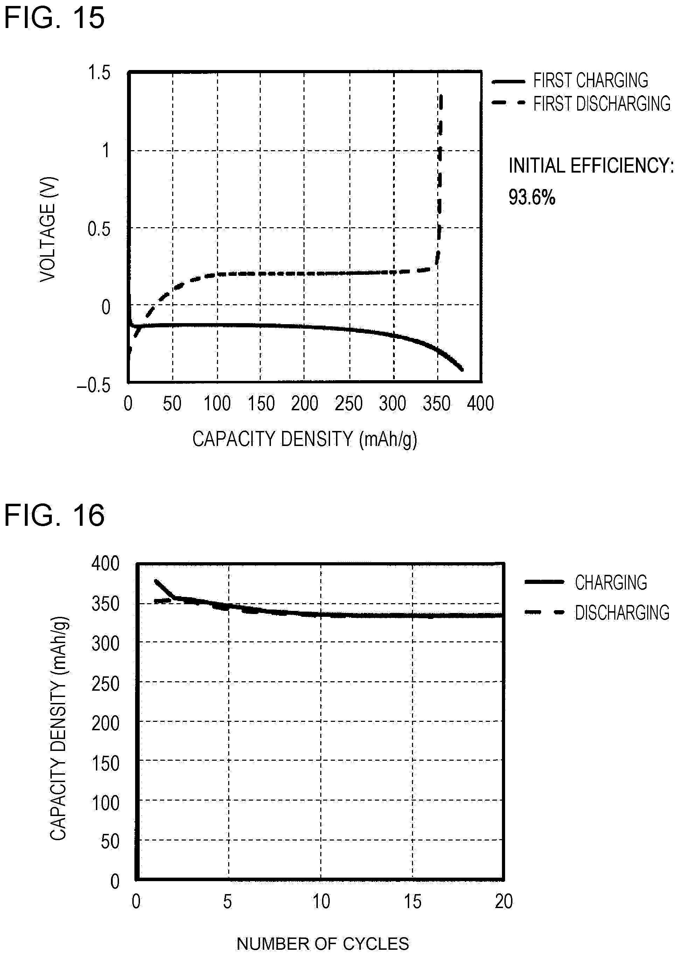

A charge-discharge test of the prepared test cell was conducted under the following conditions. Assuming that the theoretical capacity of Bi is 384 mAh/g from the weight of electroplated Bi, constant-current charging was carried out to -0.42 V (0.2 V vs Li⁺/Li) at a rate of 0.1 IT on a Bi basis, then discharging was carried out to 1.38 V (2.0 V vs Li⁺/Li), and then charging was carried out to -0.42 V (0.2 V vs Li⁺/Li). The charge-discharge test of the sample cell was performed in a 25°C constant temperature oven. Fig. 15 is a graph showing the results of the charge-discharge test of the test cell of Example 4. The initial charge capacity was about 377.1 mAh/g. The discharge capacity and the charge capacity thereafter were about 353.5 mAh/g. The initial charge-discharge efficiency was 93.6%.

### <Charge-discharge cycle test>

A charge-discharge cycle test was carried out to evaluate the cycle characteristics, where each cycle of charging and discharging was performed under the same conditions as in the charge-discharge test. Fig. 16 is a graph showing the results of the charge-discharge cycle test of the test cell of Example 4. Fig. 16 demonstrates that stable charge-discharge cycles are possible until 20 cycles.

### (Example 5)

### <Preparation of test cells>

A test cell of Example 5 was prepared as with the test cell of Example 2.

### <Charge-discharge test>

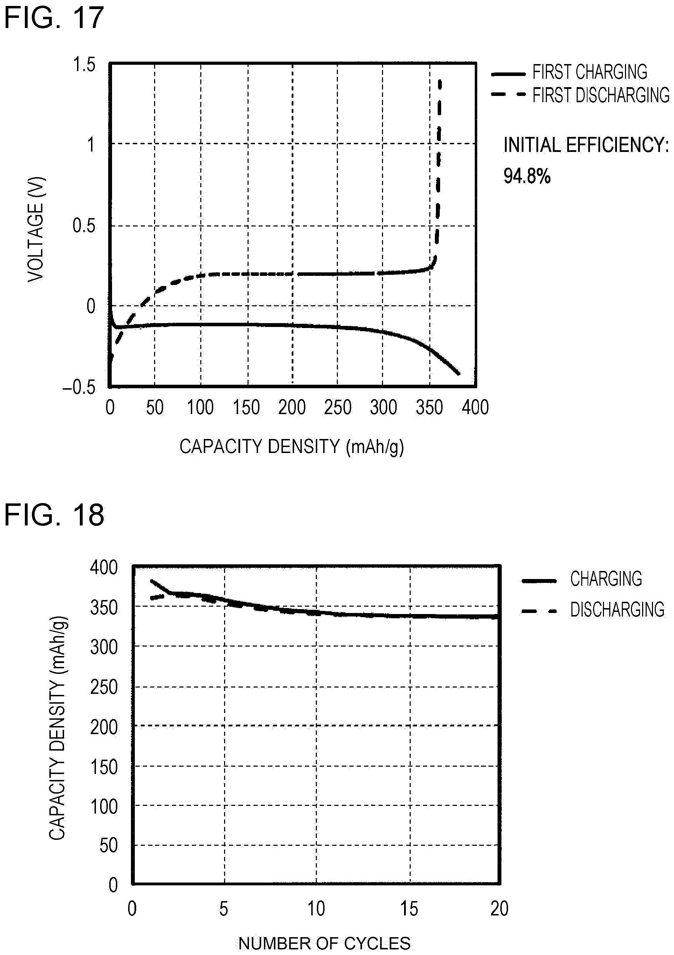

A charge-discharge test of the prepared test cell was conducted under the following conditions. Assuming that the theoretical capacity of Bi is 384 mAh/g from the weight of electroplated Bi, constant-current charging was carried out to -0.42 V (0.2 V vs Li⁺/Li) at a rate of 0.1 IT on a Bi basis, then discharging was carried out to 1.38 V (2.0 V vs Li⁺/Li), and then charging was carried out to -0.42 V (0.2 V vs Li⁺/Li). The charge-discharge test of the sample cell was performed in a 25°C constant temperature oven. Fig. 17 is a graph showing the results of the charge-discharge test of the test cell of Example 5. The initial charge capacity was about 381.0 mAh/g. The discharge capacity and the charge capacity thereafter were about 361.1 mAh/g. The initial charge-discharge efficiency was 94.8%.

### <Charge-discharge cycle test>

A charge-discharge cycle test was carried out to evaluate the cycle characteristics, where each cycle of charging and discharging was performed under the same conditions as in the charge-discharge test. Fig. 18 is a graph showing the results of the charge-discharge cycle test of the test cell of Example 5. Fig. 18 demonstrates that stable charge-discharge cycles are possible until 20 cycles.

The BiNi powder used in Example 3 exhibited an initial charge-discharge efficiency of 83.6% in a constant-current charge-discharge test at a rate of 0.1 IT on a Bi basis. In Example 4 in which an active material layer made of BiNi produced by performing a heat treatment after plating a Ni foil with Bi was used, the initial charge-discharge efficiency was 93.6% in a constant-current charge-discharge test at the same rate of 0.1 IT on a Bi basis. Furthermore, in Example 5 in which an active material layer made of BiNi produced by performing a heat treatment after plating a Ni foil with Bi was used, the initial charge-discharge efficiency was 94.8% in a constant-current charge-discharge test at the same rate of 0.1 IT on a Bi basis. These results indicate that the active material layer made of BiNi produced by performing a heat treatment after plating a Ni foil with Bi exhibited higher initial charge-discharge efficiency than the active material layer made of a BiNi powder.

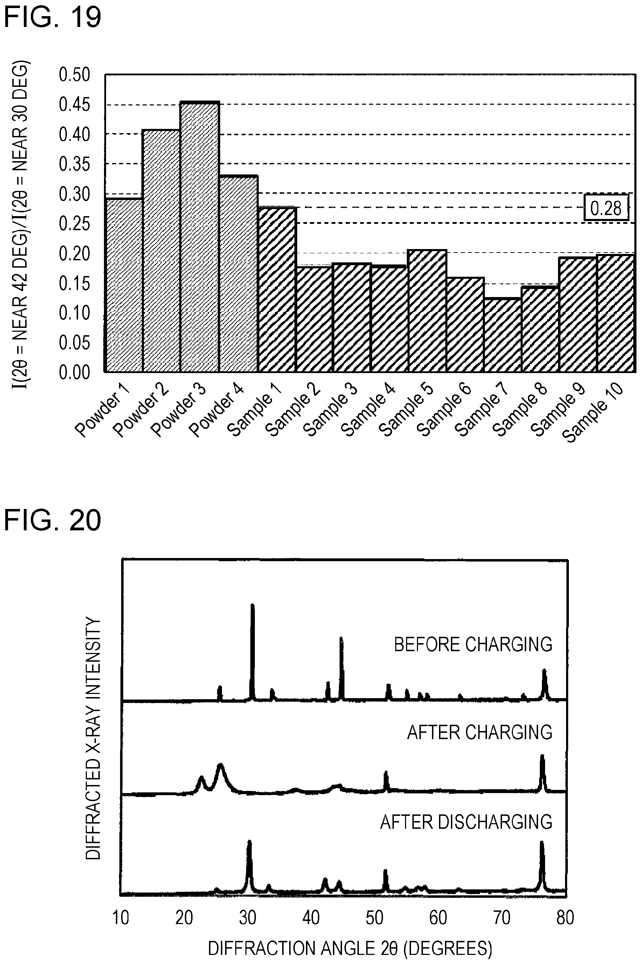

Next, the X-ray diffraction patterns of an active material layer produced by using a BiNi powder and an active material layer made of BiNi produced by performing a heat treatment after forming a Bi plating layer on a nickel foil were compared. Fig. 19 is a graph that indicate the peak intensity ratios I(2)/I(1) calculated from the X-ray diffraction patterns of 10 samples of active material layers made of BiNi synthesized by solid-phase diffusion of nickel from the nickel foil to the Bi plating layer, and four samples of active material layers made of BiNi powders prepared from powder raw materials. In Fig. 19, a sample of an active material layer produced by heat-treating a Bi plating layer on a nickel foil is indicated as "Sample", and an active material layer made of a BiNi powder is indicated as "Powder". The production conditions and peak intensity ratios I(2)/I(1) of the samples are shown in Tables 2 and 3. Table 2 indicates the heat treatment temperature of the BiNi powders synthesized by heat-treating the powder raw materials, the heat treatment time, the heat treatment atmosphere, and the ratio I(2, 2, 3)/I(2, 2, 1) of the intensity I(2, 2, 3) of the (2, 2, 3) plane to the intensity I(2, 2, 1) of the (2, 2, 1) plane in the X-ray diffraction pattern. Table 3 indicates the thickness of the Bi plating of the active material layer made of BiNi produced by performing a heat treatment after forming a Bi plating layer on a nickel foil, the heat treatment temperature, the heat treatment time, the heat treatment atmosphere, and the ratio I(2, 2, 3)/I(2, 2, 1) of the intensity I(2, 2, 3) of the (2, 2, 3) plane to the intensity I(2, 2, 1) of the (2, 2, 1) plane in the X-ray diffraction pattern.

**[Table 2]**

| | Heat treatment temperature °C | Heat treatment time hr | Heat treatment atmosphere | I(2 2 3)/I(2 2 1) |
|---|---|---|---|---|
| Powder 1 | 800 | 4 | N2 | 0.29 |
| Powder 2 | 800 | 4 | N2 | 0.41 |
| Powder 3 | 800 | 12 | N2 | 0.45 |
| Powder 4 | 900 | 24 | N2 | 0.33 |

**[Table 3]**

| | Plating thickness µm | Heat treatment temperature °C | Heat treatment time hr | Heat treatment atmosphere | I(2 2 3)/I(2 2 1) |
|---|---|---|---|---|---|
| Sample 1 | 1 | 250 | 0.5 | Ar | 0.28 |
| Sample 2 | 1 | 350 | 0.5 | Ar | 0.18 |
| Sample 3 | 1 | 350 | 2 | Ar | 0.18 |
| Sample 4 | 5 | 350 | 2 | Ar | 0.18 |
| Sample 5 | 10 | 350 | 2 | Ar | 0.20 |
| Sample 6 | 3 | 350 | 60 | Ar | 0.16 |
| Sample 7 | 5 | 350 | 60 | Ar | 0.12 |
| Sample 8 | 3 | 400 | 60 | Ar | 0.14 |
| Sample 9 | 5 | 400 | 60 | Ar | 0.19 |
| Sample 10 | 10 | 400 | 60 | Ar | 0.20 |

As shown in Tables 2 and 3 and Fig. 19, in the X-ray diffraction patterns of the active material layers made of BiNi generated by performing a heat treatment after plating the Ni foil with Bi, the maximum peak present in the diffraction angle 2θ range greater than or equal to 29° and less than or equal to 31° corresponds to the peak of the (2, 2, 1) plane of BiNi. Furthermore, in an X-ray diffraction pattern, the maximum peak present in the diffraction angle 2θ range greater than or equal to 41° and less than or equal to 43° corresponds to the peak of the (2, 2, 3) plane of BiNi. This indicates that the peak intensity ratio I(2)/I(1) is less than or equal to 0.28. This means that, in a surface of the active material layer 104, the ratio of the (2, 2, 3) plane to the (2, 2, 1) plane of a BiNi single body having a monoclinic crystal structure of space group C2/m is low. In other words, in a surface of the active material layer 104, the orientation of the (2, 2, 1) plane is stronger. This orientation controls the expansion and contraction of the active material layer during charging and discharging and ensures the connectivity of the active material in the active material layer so that the initial charge-discharge efficiency can be enhanced. In contrast, with the BiNi powder, links between adjacent parts of the active material are destroyed during expansion caused by initial charging and contraction caused by initial discharging, and the connectivity of the active material is degraded. Presumably as a result, the active material utility rate is low for the BiNi powder, and the initial charge-discharge efficiency is low compared to the active material layer made of BiNi produced by performing a heat treatment after plating a Ni foil with Bi.

A cell was produced as in Reference Example 1, and the surface X-ray diffractometry using Cu-Kα radiation was performed on the surface of an active material layer before charging, after charging, and after charging and discharging. The X-ray diffraction pattern was acquired from the surface of the Bi plating layer, that is, in the thickness direction of the active material layer 104, by a θ-2θ method with Cu-Kα radiation having wavelengths of 1.5405 Å and 1.5444 Å as X-rays by using an X-ray diffractometer (MiNi Flex produced by RIGAKU Corporation).

Fig. 20 is a graph indicating one example of X-ray diffraction patterns of the active material layer before charging, after charging, and after discharging. Fig. 20 indicates that, before charging, BiNi having a monoclinic crystal structure of space group C2/m and Ni having a cubic crystal structure of space group Fm-3m can be identified, and compounds derived from the active material and the current collector could be individually identified. After the charging, Li₃Bi having a cubic crystal structure of space group Fm-3m and Ni having a cubic crystal structure of space group Fm-3m could be identified. In other words, it has been found that Li₃Bi has been generated after the charging, and this indicates that the charging reaction: BiNi + 3Li⁺ + 3e⁻ → Li₃Bi + Ni had taken place. It has also been found that, after the charging and discharging, BiNi having a monoclinic crystal structure of space group C2/m and Ni having a cubic crystal structure of space group Fm-3m could be identified, and that, due to the discharge reaction: Li₃Bi + Ni → BiNi + 3Li⁺ + 3e⁻, from the viewpoint of the compositions of the compounds before charging, the charge-discharge reaction is reversible.

These results can demonstrate that, in Examples 1 to 5 also, the structural changes in BiNi active materials have occurred due to the same charge and discharge reactions.

These results demonstrate that the cycle characteristics of the battery improve dramatically when a solid electrolyte is used in the electrolyte layer. Examples described here use a halide solid electrolyte Li₃YBr₄Cl₂ and a sulfide solid electrolyte Li₆PS₅Cl; however, the same effects can be expected from other typical solid electrolytes as well.

Further desirably, in an X-ray diffraction pattern of the active material layer obtained by surface X-ray diffractometry with Cu-Kα radiation, when the ratio I(2)/I(1) of a height intensity I(2) of the maximum peak present in the diffraction angle 2θ range greater than or equal to 41° and less than or equal to 43° to a height intensity I(1) of the maximum peak present in the diffraction angle 2θ range greater than or equal to 29° and less than or equal to 31° is less than or equal to 0.28, the initial charge-discharge efficiency is excellent, and stable charge-discharge cycles can be obtained.

### Industrial Applicability

The battery of the present disclosure can be applied to, for example, an all-solid lithium secondary battery.

### Reference Signs List

1000 battery
100 current collector
101 first electrode
102 solid electrolyte layer
103 second electrode
104 active material layer
105 current collector
106 active material layer

## Claims

1. A battery comprising:
a first electrode;
a second electrode; and
a solid electrolyte layer disposed between the first electrode and the second electrode,
wherein the first electrode includes:
a current collector, and
an active material layer disposed between the current collector and the solid electrolyte layer,
the active material layer contains BiNi, and
the BiNi has a crystal structure of space group C2/m.

2. The battery according to claim 1, wherein,
in an X-ray diffraction pattern of the active material layer obtained by surface X-ray diffractometry with Cu-Kα radiation,
when a height intensity of a maximum peak present in a diffraction angle 2θ range greater than or equal to 29° and less than or equal to 31° is represented by I(1) and
when a height intensity of a maximum peak present in a diffraction angle 2θ range greater than or equal to 41° and less than or equal to 43° is represented by I(2),
a ratio I(2)/I(1) of the I(2) to the I(1) is less than or equal to 0.28.

3. The battery according to claim 1 or 2,
wherein the active material layer contains at least one selected from the group consisting of LiBi and Li₃Bi.

4. The battery according to any one of claims 1 to 3,
wherein the active material layer does not contain an electrolyte.

5. The battery according to any one of claims 1 to 4,
wherein the active material layer contains the BiNi as a main component of an active material.

6. The battery according to claim 5, wherein the active material layer contains substantially only the BiNi as the active material.

7. The battery according to any one of claims 1 to 6,
wherein the current collector contains Ni.

8. The battery according to any one of claims 1 to 7,
wherein the active material layer is a heat-treated plating layer.

9. The battery according to any one of claims 1 to 8,
wherein the solid electrolyte layer contains a halide solid electrolyte, and
the halide solid electrolyte is substantially free of sulfur.

10. The battery according to any one of claims 1 to 8,
wherein the solid electrolyte layer contains a sulfide solid electrolyte.

11. The battery according to any one of claims 1 to 10,
wherein the first electrode is a negative electrode, and
the second electrode is a positive electrode.

12. A method for manufacturing electrode comprising:
forming a Bi plating layer on a Ni-containing current collector by an electroplating method; and
heating the current collector and the Bi plating layer to cause Ni contained in the current collector to diffuse into the Bi plating layer so as to obtain an electrode in which an active material layer containing BiNi is formed on the current collector.

13. The method according to claim 12,
wherein the BiNi has a crystal structure of space group C2/m.

14. The method according to claim 12 or 13,
wherein the current collector and the Bi plating layer are heated at a temperature higher than or equal to 250°C.
